# EUROPÄISCHE PATENTANMELDUNG

(11) **EP 4 786 228 A1**
(43) Veröffentlichungstag der Anmeldung: **05.08.2026**
(21) Anmeldenummer: 26152512.5
(22) Anmeldetag: 19.01.2026
(51) Int. Cl.: B60H 1/32, B60H 1/00

(54) **MODUL ZUR KLIMATISIERUNG EINES INNENRAUMS EINES CAMPERS O.Ä**

(30) Priorität: 29.01.2025 DE 202025100443 U
(71) Anmelder: Truma Gerätetechnik GmbH & Co. KG, 85640 Putzbrunn (DE)
(72) Erfinder: Wickelmaier, Peter, 85640 Putzbrunn (DE); Pless, Daniel, 85640 Putzbrunn (DE)
(74) Vertreter: Prinz & Partner mbB

(57) **Zusammenfassung**

Die Erfindung betrifft ein Modul (4) zur Klimatisierung eines Innenraums (1) eines Caravans (2) o. ä., mit
- einem Innen-Luftkanal (10), in dem ein Innen-Wärmetauscher (12) angeordnet ist, der dafür vorgesehen ist, mit Luft aus dem Innenraum des Caravans zu interagieren,
- einem Außen-Luftkanal (20), in dem ein Außen-Wärmetauscher (22) angeordnet ist, der dafür vorgesehen ist, mit Außenluft zu interagieren,
- einer Überströmöffnung (34), die in einer Trennwand (32) zwischen dem Innen-Luftkanal (10) und dem Außen-Luftkanal (20) stromabwärts des Innen-Wärmetauschers (12) und stromaufwärts des Außen-Wärmetauschers (22) angeordnet ist,
- einem Schaltelement (36), das die Überströmöffnung (34) verschließen oder freigeben kann, und
- mit einem Kondensatelement, dem Wärmeenergie aus dem Innen-Luftkanal (10) zugeführt werden kann, wobei das Kondensatelement zum Auffangen und Abführen von sich am Außen-Wärmetauscher (22) bildendem Kondensat dient, wobei das Kondensatelement unterhalb des Außen-Wärmetauschers (22) angeordnet ist.

## Beschreibung

Die Erfindung betrifft ein Modul zur Klimatisierung eines Innenraums eines Caravans o.ä., das eine Wärmepumpe verwendet.

Mit einer Wärmepumpe kann ein Caravan, Wohnmobil, Wohnwagen, Schiffskajüte, etc. mit geringem Energieaufwand beheizt werden. Bei Bedarf kann das Modul auch umgekehrt als Klimaanlage zur Kühlung betrieben werden.

Ein zentrales Problem bei der Verwendung von Wärmepumpen in solchen mobilen Wohnräumen ist die Vereisung des Verdampfers bei niedrigen Außentemperaturen.

Wird ein Klimagerät im Wärmepumpenbetrieb zum Heizen verwendet und liegt die Außentemperatur um den Gefrierpunkt, kondensiert die Luftfeuchtigkeit am kalten Verdampfer und gefriert im Laufe der Zeit. Es bildet sich eine Eis- oder Schneeschicht auf den Lamellen und Rohren des Verdampfers. Diese Eisbildung blockiert den Luftstrom durch den Verdampfer, was zu einem Leistungsabfall führt und die Funktion des Geräts beeinträchtigt. Bei sehr starker Vereisung kann die Wärmepumpe gar nicht mehr betrieben werden. Um die Funktionsfähigkeit der Wärmepumpe sicherzustellen, muss daher eine starke Vereisung verhindert oder der Verdampfer zyklisch abgetaut werden.

Da eine Vereisung oft nicht vollständig verhindert werden kann, ist es in der Praxis üblich, den Verdampfer zyklisch abzutauen. Hierzu muss Wärmeenergie in den Verdampfer eingebracht werden, um das Eis abzuschmelzen. Die heute gängigen Verfahren bei Luft-Luft-Wärmepumpen sind die Heißgas-Bypass-Abtauung und die Reverse-Cycle-Abtauung.

Bei der Heißgas-Bypass-Abtauung wird heißes Kältemittel direkt vom Kompressor in den Verdampfer geleitet. Allerdings steht zum Abtauen nur die Energie zur Verfügung, die der Kompressor beim Verdichtungsvorgang in Wärmeenergie umwandelt. Bei der Reverse-Cycle-Abtauung wird der Kältekreis mittels eines Vier-Wege-Ventils umgedreht. Dabei werden Wärmepumpe und Klimaanlage funktional vertauscht; der Verdampfer wird zum Kondensator und umgekehrt. Dies ermöglicht es, zusätzlich zur Kompressorenergie auch Wärmeenergie aus dem Innenraum zum Abtauen zu nutzen.

Ein Nachteil der Reverse-Cycle-Abtauung besteht darin, dass das Klimagerät, da es mehrere Minuten als Klimaanlage betrieben wird, kalte Luft in den Wohnraum einbläst. Dies geschieht zu einem Zeitpunkt, in dem der Nutzer erwartet, dass warme Luft eingeblasen werden soll. Dies kann vom Nutzer als irritierend empfunden werden. Hinzu kommt, dass beim Umschalten vom Wärmepumpen- zum Klimaanlagenbetrieb und zurück das System jeweils mehrere Minuten braucht, bis die volle Leistung im jeweiligen Betriebsmodus bereitgestellt werden kann, was den Zeitraum verlängert, bis maximal abgetaut und dann wieder maximal geheizt werden kann. Dieser nachteilige Umschaltvorgang und das Ausbleiben der Heizleistung sind systembedingte Nachteile sowohl bei der Heißgas-Abtauung als auch bei der Reverse-Cycle-Abtauung.

Aus der US 4,459,816 ist eine Wärmepumpe bekannt, die in einem Gebäude installiert ist. Sie dient der Beheizung von Wasser in einem Warmwasserspeicher, der sich innerhalb eines Raumes des Gebäudes befindet. Der Kondensator der Wärmepumpe befindet sich in diesem Raum und gibt die Wärme an eine Kaltwasserleitung ab, wodurch das Wasser im Speicher erwärmt wird. Dieses System kann zur Erwärmung von Brauchwasser oder für eine Zentralheizung genutzt werden. Beim Betrieb der Wärmepumpe bei niedrigen Außentemperaturen kann sich Frost auf dem Verdampfer bilden. Um den Verdampfer bei Bedarf abzutauen, kann ein Strömungskanal geöffnet werden, mit dem Raumluft über den Verdampfer geleitet wird. Es ist auch angesprochen, dass der Verdampfer dazu verwendet werden kann, die Raumluft zu erwärmen.

Aus der DE 31 42 621 A1 sind ein Verfahren und eine Vorrichtung zur Verbesserung des Abtauens von Verdampfern und Drainiertrögen bei Luftbehandlungsaggregaten mit Wärmepumpen bekannt. Dabei wird die warme Abluft einer beheizten Einheit genutzt, um sowohl den Verdampfer als auch den darunterliegenden Drainiertrog effektiv von Eis zu befreien. In herkömmlichen Wärmerückgewinnungssystemen mit Wärmepumpen kommt es bei niedrigen Außentemperaturen häufig zur Bildung von Eis auf den Verdampfern und in den Drainiertrögen, was die Betriebszuverlässigkeit und den Wirkungsgrad der Anlage beeinträchtigen kann. Um zu verhindern, dass sich auf den Drainiertrögen eine Eisschicht bildet, wird warme Abluft der Anlage an der Unterseite aller Drainiertröge entlangzuführen. Dadurch werden die Drainiertröge erwärmt, unerwünschter Eisaufbau wird verhindert, und eventuell vorhandenes Eis wird geschmolzen, ohne dass zusätzliche Heizelemente erforderlich sind. Die Abluft strömt anschließend zwischen den Drainiertrögen nach oben und wird über eine Klappe zu dem gewünschten Verdampfer geleitet. Durch die Stellung der Klappe kann die Abluft wahlweise durch den einen oder den anderen Verdampfer geführt werden, wodurch gezieltes Abtauen ermöglicht wird.

Aus der EP 2 611 634 A1 ist eine Klimaanlage für Fahrzeuge bekannt, bei der im Fall eines vereisten Außen-Wärmetauschers warmes Kältemittel nach Durchströmen des Innenheizkondensators direkt zum Außen-Wärmetauschers geleitet wird, um diesen abzutauen. Diese Methode ermöglicht effektives Abtauen des Verdampfers, indem das warme Kältemittel die Eisbildung am Außen-Wärmetauschers schmilzt. Dadurch wird sichergestellt, dass der Verdampfer auch bei niedrigen Temperaturen zuverlässig arbeitet, ohne dass zusätzliche Komponenten oder erheblicher Energieeinsatz erforderlich sind.

Aus der US 2024 0068736 A1 ist eine Wärmepumpe mit einem speziellen Kondensat-Management-System bekannt, das die Ansammlung von gefrierendem Wasser während des Heizbetriebs verhindert. Durch eine unter dem Verdampfer angeordnete Wanne wird das produzierte Kondensat direkt zu einer unteren Ablaufwanne geleitet. Die erste Wanne fungiert als Barriere, die verhindert, dass Kondensat zu anderen Komponenten wie dem Lüfter oder Motor gelangt, wodurch die Gefahr von Frostbildung reduziert wird. Zusätzlich kommt eine temperaturgesteuerte Ablassvorrichtung zum Einsatz, die bei bestimmten Temperaturen aktiviert wird, um das Kondensat abzuleiten und so Eisbildung auf dem Verdampfer zu verhindern.

Aus der DE 10 2013 106 209 A1 sind ein Verfahren und eine Vorrichtung zur Erkennung und Vermeidung der Vereisung eines Verdampfers in einem Klimatisierungssystem bekannt. Dabei wird die Stromaufnahme eines dem Verdampfer zugeordneten Gebläses gemessen, um die elektrische Leistungsaufnahme zur Förderung der Luft durch den Verdampfer zu bestimmen. Bei Beginn der Vereisung erhöht sich der Strömungswiderstand an der Wärmeübertragungsfläche des Verdampfers, was zu einer reduzierten Luftmenge und somit zu einer niedrigeren Leistungsaufnahme des Gebläses führt. Durch den Vergleich der aktuellen Leistungsaufnahme mit einem Sollwert, der aus der Kennlinie des Gebläses ermittelt wird, kann eine beginnende Vereisung erkannt werden. Unterschreitet die Leistungsaufnahme den Sollwert, werden Maßnahmen zur Vermeidung der Vereisung eingeleitet oder eine aktive Enteisung gestartet. Dieses Verfahren ermöglicht es, die Wärmepumpenfunktion des Klimatisierungssystems kontinuierlich aufrechtzuerhalten, ohne Betriebsunterbrechungen durch Vereisung zu riskieren.

Die Aufgabe der Erfindung besteht darin, ein Modul zum Klimatisieren eines Innenraums eines Caravans o.ä. zu schaffen, das eine mit geringem Energieeinsatz betreibbare Wärmepumpe aufweist, deren Betrieb nicht durch Vereisung beeinträchtigt wird.

Zur Lösung dieser Aufgabe ist erfindungsgemäß ein Modul zur Klimatisierung eines Innenraums eines Caravans o.ä. vorgesehen, mit einem Innen-Luftkanal, in dem ein Innen-Wärmetauscher angeordnet ist, der dafür vorgesehen ist, mit Luft aus dem Innenraum des Caravans zu interagieren, einem Außen-Luftkanal, in dem ein Außen-Wärmetauscher angeordnet ist, der dafür vorgesehen ist, mit Außenluft zu interagieren, einer Überströmöffnung die in einer Trennwand zwischen dem Innen-Luftkanal und dem Außen-Luftkanal stromabwärts des Innen-Wärmetauschers und stromaufwärts des Außen-Wärmetauschers angeordnet ist, einem Schaltelement, das die Überströmöffnung verschließen oder freigeben kann, und mit einem Kondensatelement, dem Wärmeenergie aus dem Innen-Luftkanal zugeführt werden kann, wobei das Kondensatelement zum Auffangen und Abführen von sich am Außen-Wärmetauscher bildendem Kondensat dient, wobei das Kondensatelement unterhalb des Außen-Wärmetauschers angeordnet ist. Der besondere Vorteil des erfindungsgemäßen Moduls liegt darin, dass der Verdampfer mit geringem Aufwand enteist werden kann, während die Wärmepumpe ununterbrochen weiterbetrieben werden kann. Es wird lediglich durch Öffnen der Überströmöffnung ein (in der Regel, aber nicht zwingend kleinerer) Teil der erzeugten Warmluft abgezweigt und durch den als Verdampfer betriebenen Außen-Wärmetauscher geleitet, der mit der auf diese Weise eingebrachten Wärmemenge enteist wird. Gleichzeitig kann ein (in der Regel, aber nicht zwingend größerer) Teil der insgesamt bereitgestellten Warmluft in den zu beheizenden Innenraum geleitet werden. Der Nutzer kann allenfalls bemerken, dass temporär, nämlich für den Zeitraum des Enteisens, etwas weniger warme Luft im Innenraum ankommt. Insgesamt gibt es aber während des Enteisens keine Komforteinbußen, da die Wärmepumpe kontinuierlich betrieben werden kann. Zusätzlich kann durch die Übertragung von Wärmeenergie aus der "Warmluftseite" des Moduls zum Kondensatelement gewährleistet werden, dass es dort zu keinen Problemen mit Vereisung kommt.

In einer Ausführungsform der Erfindung ist das Schaltelement verstellbar zwischen einer Position, in der die Überströmöffnung vollständig geschlossen ist, und einer Position, in der ein Außenluft-Einlass zum Außen-Luftkanal verschlossen ist. Durch das Verschließen des Außenluft-Einlasses wird der Außen-Wärmetauscher vollständig von der kalten Außenluft "abgeschnitten", so dass das Enteisen beschleunigt wird.

In einer Variante der Erfindung ist im Innen-Luftkanal und im Außen-Luftkanal jeweils ein Gebläse angeordnet. Der Vorteil dieser Anordnung liegt darin, dass durch separate Gebläse in beiden Luftkanälen der Luftstrom unabhängig voneinander geregelt werden kann. Dies führt zu einer verbesserten Energieeffizienz und ermöglicht eine genaue Anpassung der Luftströmung an die jeweiligen Betriebsbedingungen, was den Komfort für den Nutzer erhöht. Insbesondere kann durch die Ansteuerung der beiden Gebläse auch bei vollständig geöffnetem Schaltelement eingestellt werden, welcher Anteil der Warmluft in den Innenraum geleitet wird und welcher Anteil der Warmluft zum Enteisen des Außen-Wärmetauschers verwendet wird.

In einer weiteren Ausführungsform der Erfindung ist im Innen-Luftkanal eine Verteilklappe vorgesehen, mit der der Luftstrom zwischen einem ersten und einem zweiten Innenraum-Luftauslass verteilt werden kann. Auf diese Weise kann der Luftstrom innerhalb des Innenraums gezielt gesteuert werden. Durch die Verteilklappe ist es möglich, verschiedene Bereiche des Innenraums individuell zu klimatisieren, was zu einem erhöhten Komfort und einer effizienten Nutzung der Wärmeenergie führt.

In einer Variante der Erfindung ist in einer Trennwand zwischen dem Außen-Luftkanal und dem Innen-Luftkanal eine Zuluftöffnung vorgesehen, der eine Zuluftklappe zugeordnet ist. Der Vorteil dieser Ausführungsform liegt darin, dass bei geöffneter Zuluftklappe kontrolliert frische Außenluft in den Innen-Luftkanal und damit in den Innenraum eingebracht werden kann. Dies verbessert die Luftqualität im Innenraum und ermöglicht eine bedarfsgerechte Belüftung.

In einer Ausführungsform der Erfindung mündet die Zuluftöffnung stromabwärts der Verteilklappe im Innen-Luftkanal. Hierdurch kann gewährleistet werden, dass die Zuluft, die üblicherweise eher kalt ist, zu oben im Innenraum angeordneten Ausströmöffnungen geleitet werden, so dass die Zuluft sich im Innenraum verteilt und eine Temperaturschichtung verhindert ist.

In einer weiteren Ausführungsform der Erfindung ist ein Wärmeleitelement vorgesehen, das dem Schaltelement zugeordnet ist und sich aus dem Innen-Luftkanal in den Außen-Luftkanal erstreckt. Der Vorteil dieser Konstruktion besteht darin, dass Wärmeenergie effizient vom warmen Innen-Luftkanal in den kälteren Außen-Luftkanal übertragen werden kann. Die Wärmeenergie kann dazu verwendet werden, auf passive Weise Eisbildung am Kondensatelement zu verhindern.

In einer Ausführungsform der Erfindung ist das Kondensatelement als Kondensatwanne ausgebildet, die dem Außen-Wärmetauscher zugeordnet ist, wobei die Kondensatwanne mindestens einen Luftauslass aufweist, der mit dem Innen-Luftkanal stromabwärts des Innen-Wärmetauschers in Strömungsverbindung steht. Durch die Strömungsverbindung kann ein kleiner Teil der Warmluft aus dem Innen-Luftkanal abgezweigt werden, mit der bestimmte Bereiche der Kondensatwanne beheizt werden. Auf diese Weise wird dort gezielt ein Vereisen verhindert.

Das Kondensatelement ist in einer Ausgestaltung ein separates KunststoffBauteil, das in der Wärmepumpe angeordnet ist und gewährleistet, dass dort anfallendes Kondensat in der gewünschten Weise gesammelt und abgeleitet werden kann. Das Kondensatelement kann aber grundsätzlich auch nicht separat, sondern stattdessen integriert oder sogar einstückig mit dem Gehäuse des Moduls zur Klimatisierung ausgebildet werden. Beispielsweise kann die Kontur des Kondensatelements im Gehäuse des Moduls direkt eingeformt werden, so dass dort eine wannenartige Struktur erzeugt wird. Das Gehäuse kann beispielsweise aus EEP (expandiertes Polypropylen) herstellt sein.

In einer Variante der Erfindung umgibt der Luftauslass eine Kondensatabführöffnung. Der Vorteil dieser Ausführungsform ist, dass die warme Luft direkt um die Kondensatabführöffnung herumgeführt wird, wodurch ein Einfrieren des Kondensatauslasses verhindert wird. Dies sorgt für einen kontinuierlichen und störungsfreien Abfluss des Kondensats.

In einer weiteren Ausführungsform der Erfindung ist der Luftauslass dem Schaltelement zugeordnet. Es wird dadurch verhindert, dass sich am Schaltelement Eis bildet, was die Funktionsweise des Schaltelements beeinträchtigen könnte.

In einer Ausführungsform der Erfindung ist der Luftauslass dem Außen-Wärmetauscher zugeordnet. Der Vorteil dieser Anordnung liegt darin, dass die warme Luft gezielt zum Außen-Wärmetauscher geleitet wird, um dessen Vereisung effektiv zu verhindern oder zu beseitigen. Dies erhöht die Effizienz des Enteisungsvorgangs und minimiert Unterbrechungen im Heizbetrieb.

In einer Variante der Erfindung ist der Luftauslass einem Außenluft-Einlass zugeordnet. Der technische Vorteil hierbei ist, dass warme Luft den Außenluft-Einlass vor Vereisung schützt. Dadurch bleibt der Lufteintritt stets frei, was die Leistung des Außen-Luftkanals und somit die Effizienz des gesamten Systems verbessert.

In einer weiteren Ausführungsform der Erfindung ist ein Heizluft-Führungskanal unterhalb einer Bodenfläche der Kondensatwanne angeordnet. Der Vorteil dieser Konstruktion besteht darin, dass die Wärme der Heizluft direkt unter der Kondensatwanne entlanggeführt wird. Dies verhindert ein Einfrieren des Kondensats an der Bodenfläche der Wanne und sorgt für eine zuverlässige Ableitung des Schmelzwassers, was die Betriebssicherheit erhöht.

Die Erfindung wird nachfolgend anhand verschiedener Ausführungsformen beschrieben, die in den beigefügten Zeichnungen dargestellt sind. In den Zeichnungen zeigen:
- Figur 1 in einem Schnitt ein erfindungsgemäßes Modul eingebaut in einem zu beheizenden Innenraum, wobei das Modul als Wärmepumpe betrieben wird;
- Figur 2 das Modul von Figur 1, wobei es als Wärmepumpe betrieben und der Verdampfer abgetaut wird;
- Figur 3 das Modul von Figur 1 eine Ausführungsvariante mit stehend angeordnetem Außen-Wärmetauscher, wobei das Modul als Wärmepumpe betrieben wird;
- Figur 4 das Modul von Figur 3, wobei es als Wärmepumpe betrieben und der Verdampfer abgetaut wird;
- Figur 5 das Modul gemäß einer zweiten Ausführungsform, wobei es als Wärmepumpe betrieben und Warmluft über einen ersten Innenraum-Luftauslass abgegeben wird;
- Figur 6 das Modul von Figur 5, wobei es als Wärmepumpe betrieben und Warmluft über einen zweiten Innenraum-Luftauslass abgegeben wird;
- Figur 7 das Modul gemäß einer dritten Ausführungsform, wobei es als Wärmepumpe betrieben wird;
- Figur 8 das Modul von Figur 7, wobei es zum Zuführen von Frischluft zum Innenraum betrieben wird;
- Figur 9 das Modul von Figur 7, wobei es zum Trocknen der Luft im Innenraum verwendet wird;
- Figur 10 einen Ausschnitt des Moduls von Figur 1, wobei Details der Kondensatableitung gezeigt sind;
- Figur 11 einen Ausschnitt des Moduls von Figur 2, wobei Details der Kondensatableitung gezeigt sind;
- Figur 12 einen Ausschnitt des Moduls von Figur 3, wobei Details der Kondensatableitung gezeigt sind;
- Figur 13 einen Ausschnitt des Moduls von Figur 4, wobei Details der Kondensatableitung gezeigt sind;
- Figur 14 in einer perspektivischen geschnittenen Ansicht eine Kondensatwanne, die im Modul der Figuren 10 bis 13 verwendet wird;
- Figur 15 die Kondensatwanne von Figur 14 in einer perspektivischen Ansicht von oben;
- Figur 16 die Kondensatwanne von Figur 14 in einer perspektivischen Ansicht von unten;
- Figur 17 einen Ausschnitt des Moduls von Figur 1, wobei Details eines Wärmeleitelements zur Verhinderung von Vereisung gezeigt sind; und
- Figur 18 einen Ausschnitt des Moduls von Figur 3, wobei Details eines Wärmeleitelements zur Verhinderung von Vereisung gezeigt sind.

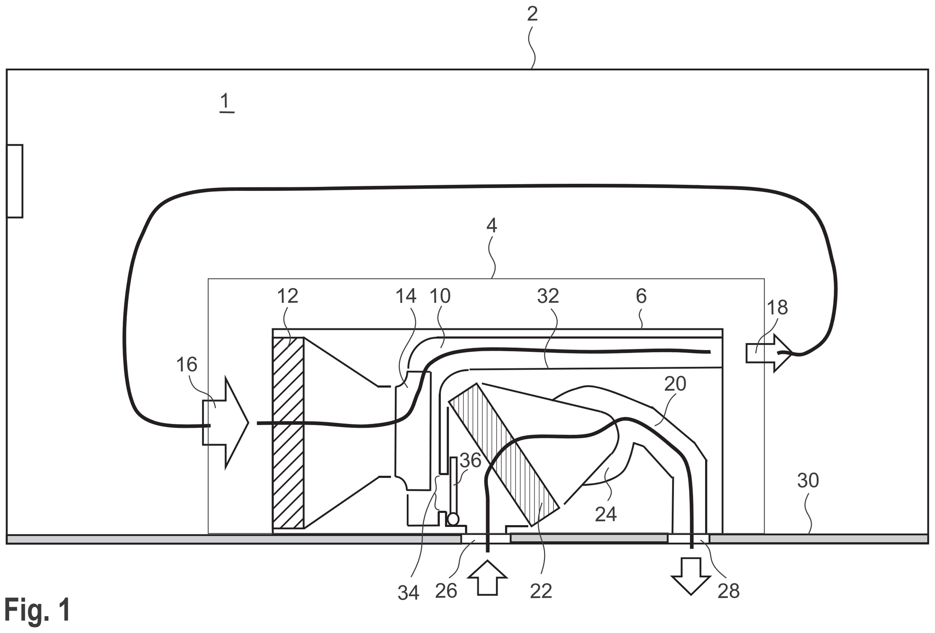

Anhand von Figur 1 wird nachfolgend der Aufbau eines Moduls zur Klimatisierung eines Innenraums 1 eines Caravans 2, eines Wohnmobils, eines Wohnwagens, einer Schiffskajüte, etc. beschrieben. Das Modul weist allgemein ausgedrückt eine Wärmepumpe auf, die elektrisch betrieben werden kann, um dem Innenraum Warmluft zuzuführen. Bei Bedarf kann das Modul auch umgekehrt als Klimaanlage zur Kühlung betrieben werden, so dass dem Innenraum Kaltluft zugeführt wird.

Die einzelnen Bauteile der Wärmepumpe werden nachfolgend nur insoweit erläutert, als sie zum Verständnis der Funktionsweise des Moduls erforderlich sind.

Das Modul ist hier allgemein mit dem Bezugszeichen 4 bezeichnet. Es ist dem Innenraum 1 des Caravans 2 o.ä. zugeordnet. In der gezeigten Ausführungsform ist es als kompakte Baugruppe ausgeführt, die in einem Gehäuse 6 angeordnet ist.

Innerhalb des Gehäuses 6 ist ein Innen-Luftkanal 10 gebildet, in dem ein Innen-Wärmetauscher 12 angeordnet ist. Der Innen-Wärmetauscher 12 ist dafür vorgesehen, mit Luft aus dem Innenraum des Caravans zu interagieren. Wenn das Modul 4 als Wärmepumpe betrieben wird, arbeitet der Innen-Wärmetauscher 12 als Kondensator und gibt Wärme an die ihn durchströmende Luft ab. Wenn das Modul 4 als Klimaanlage betrieben wird, arbeitet der Innen-Wärmetauscher 12 als Verdampfer und entzieht der ihn durchströmenden Luft Wärme.

Im Innen-Luftkanal ist ein Innen-Gebläse 14 angeordnet, mit dem der Luftmassenstrom durch den Innen-Luftkanal gesteuert werden kann.

Das innen-Gebläse 14 ist bei der gezeigten Ausführungsform stromabwärts des Innen-Wärmetauschers 12 angeordnet.

Das Modul 4 weist einen Innenluft-Einlass 16 und einen Innenluft-Auslass 18 auf, die dem Innenraum 1 zugeordnet sind und (jedenfalls für einen Großteil der Betriebsmodi des Moduls 4) den Anfang und das Ende des von der Innenluft durchströmten Innen-Luftkanals 10 darstellen.

Innerhalb des Gehäuses 6 ist auch ein Außen-Luftkanal 20 gebildet, in dem ein Außen-Wärmetauscher 22 angeordnet ist. Der Außen-Wärmetauscher 22 dient dazu, mit Außenluft zu interagieren, um Wärmeenergie aufzunehmen oder abzugeben. Wenn das Modul 4 als Wärmepumpe betrieben wird, arbeitet der Außen-Wärmetauscher 22 als Verdampfer und entzieht der ihn durchströmenden Luft Wärme. Wenn das Modul 4 als Klimaanlage betrieben wird, arbeitet der Außen-Wärmetauscher 22 als Kondensator und gibt Wärme an die ihn durchströmende Luft ab.

Im Außen-Luftkanal 20 ist ein Außen-Gebläse 24 angeordnet, mit dem der Luftmassenstrom durch den Außen-Luftkanal 20 gesteuert werden kann.

Das Außen-Gebläse 24 ist bei der gezeigten Ausführungsform stromabwärts des Außen-Wärmetauschers 22 angeordnet.

Das Modul 4 weist einen Außenluft-Einlass 26 und einen Außenluft-Auslass 28 auf, die zur Umgebung des Caravans o.ä. führen, also entweder unmittelbar in einer Außenwand des Caravans o.ä. ausgebildet sind (im gezeigten Ausführungsbeispiel in einem Boden 30) oder mit der Außenumgebung in Strömungsverbindung stehen. Der Außenluft-Einlass 26 und der Außenluft-Auslass 28 stellen (jedenfalls für einen Großteil der Betriebsmodi des Moduls 4) den Anfang und das Ende des von der Außenluft durchströmten Außen-Luftkanals 20 dar.

Der Innen-Luftkanal 10 und der Außen-Luftkanal 20 sind durch eine Trennwand 32 voneinander getrennt. In dieser Trennwand 32 ist eine Überströmöffnung 34 angeordnet, die sich stromabwärts des Innen-Wärmetauschers 12 und stromaufwärts des Außen-Wärmetauschers 22 befindet.

Der Überströmöffnung 34 ist ein Schaltelement 36 zugeordnet, mit dem die Überströmöffnung 34 wahlweise verschlossen oder freigegeben werden kann.

Das Schaltelement 36 kann als Klappe ausgebildet sind.

Ein Antrieb für das Schaltelement 36, beispielsweise ein Aktor, ist hier nicht dargestellt.

In Figur 1 ist das Modul im Betriebsmodus "Heizen" gezeigt.

Im Heizmodus wird die Raumluft über den Innenluft-Einlass 16 in den Innen-Luftkanal 10 eingesaugt. Dort strömt die Luft durch den Innen-Wärmetauscher 12, der als Kondensator fungiert und die Luft erwärmt. Das stromabwärts positionierte Innen-Gebläse 14 fördert die erwärmte Luft anschließend durch den Innenluft-Auslass 18 zurück in den Innenraum 1, wodurch dieser beheizt wird.

Parallel dazu wird Außenluft vom Außen-Gebläse 24 über den Außenluft-Einlass 26 in den Außen-Luftkanal 20 gesaugt. Die Luft durchströmt den Außen-Wärmetauscher 22, der als Verdampfer arbeitet und der Außenluft Wärme entzieht. Das Außen-Gebläse 24 führt die abgekühlte Außenluft durch den Außenluft-Auslass 28 zurück in die Außenumgebung.

Der (hier nicht gezeigte) Kältemittelkreislauf der Wärmepumpe transportiert dabei die aufgenommene Wärmeenergie vom Außen-Wärmetauscher 22 zum Innen-Wärmetauscher 12. Im Außen-Wärmetauscher 22 verdampft das Kältemittel durch die aufgenommene Wärme und kondensiert anschließend im Innen-Wärmetauscher 12, wobei es die Wärme an die Innenluft abgibt.

Im Heizmodus ist das Schaltelement 36 in der in Figur 1 gezeigten Stellung, in der die Überströmöffnung 34 vollständig geschlossen ist. Dadurch ist gewährleistet, dass die maximale Heizleistung für den Innenraum zur Verfügung steht.

Das beschriebene Modul 4 kann auch umgekehrt betrieben werden, also als Klimaanlage, wobei dann der Innen-Wärmetauscher 12 als Verdampfer wirkt und der Außen-Wärmetauscher 22 als Kondensator. Auf diese Weise kann bei hohen Außentemperaturen der Innenraum 1 gekühlt werden.

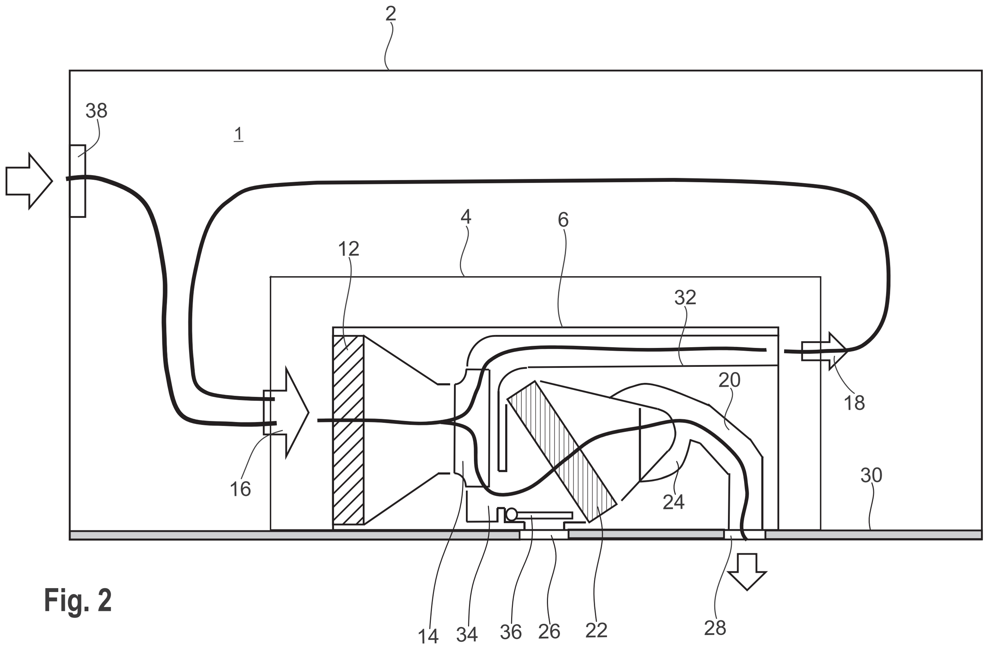

Wird erkannt, dass der Außen-Wärmetauscher 22 vereist ist, wird das Modul von Figur 1 in einem Betriebsmodus "Heizen mit gleichzeitigem Enteisen" betrieben. Dieser Betriebsmodus ist in Figur 2 gezeigt.

Im Betriebsmodus "Heizen mit gleichzeitigem Enteisen" ist das Schaltelement 36 vollständig geöffnet, wodurch die Überströmöffnung 34 zwischen dem Innen-Luftkanal 10 und dem Außen-Luftkanal 20 freigegeben wird. Gleichzeitig verschließt das Schaltelement 36 den Außenluft-Einlass 26, sodass keine kalte Außenluft mehr in den Außen-Luftkanal 20 einströmen kann.

Aus dem Warmluftstrom, der stromabwärts des Innen-Wärmetauschers zur Verfügung steht, wird in diesem Betriebsmodus ein Teil "abgezapft" und durch die Überströmöffnung 34 zum Außen-Wärmetauscher geleitet, so dass dort vorhandenes Eis abgetaut wird.

Gleichzeitig wird ein Teil der Warmluft vom Innen-Gebläse 14 über den Innenluft-Auslass 18 zurück in den Innenraum 1 gefördert, wodurch dieser weiterhin beheizt wird.

Die Volumenanteile des Warmluftstroms, die zum Heizen des Innenraums 1 und zum Abtauen des Außen-Wärmetauschers 22 verwendet werden, können durch das Verhältnis der Drehzahlen des Innen-Gebläses 14 und des Außen-Gebläses 24 eingestellt werden. Je höher die Drehzahl des Außen-Gebläses 24 relativ zur Drehzahl des Innen-Gebläses 14, desto mehr Warmluft steht zum Abtauen und desto weniger Warmluft steht zum Heizen des Innenraums 1 zur Verfügung.

Um dasjenige Luftvolumen zu ersetzen, das über den Außenluft-Auslass 28 aus dem Innenraum 1 herausgefördert wird, ist eine Ausgleichsöffnung 38 im Caravan 2 o.ä. vorgesehen, über die, wenn der Druck im Innenraum 1 unterhalb des Umgebungsdrucks absinkt, Luft nachströmen kann. Die Ausgleichsöffnung 38 kann rein passiv arbeiten, beispielsweise mit Lamellen, die schwerkraftbedingt automatisch schließen, oder auch aktiv angesteuert, wobei Klappen oder Lamellen zwischen der geschlossenen und einer geöffneten Stellung verstellt werden.

Wenn der Außen-Wärmetauscher 22 abgetaut ist, wird die Überströmöffnung 34 wieder verschlossen, und es steht wieder die gesamte Warmluft zum Beheizen des Innenraums 1 zur Verfügung.

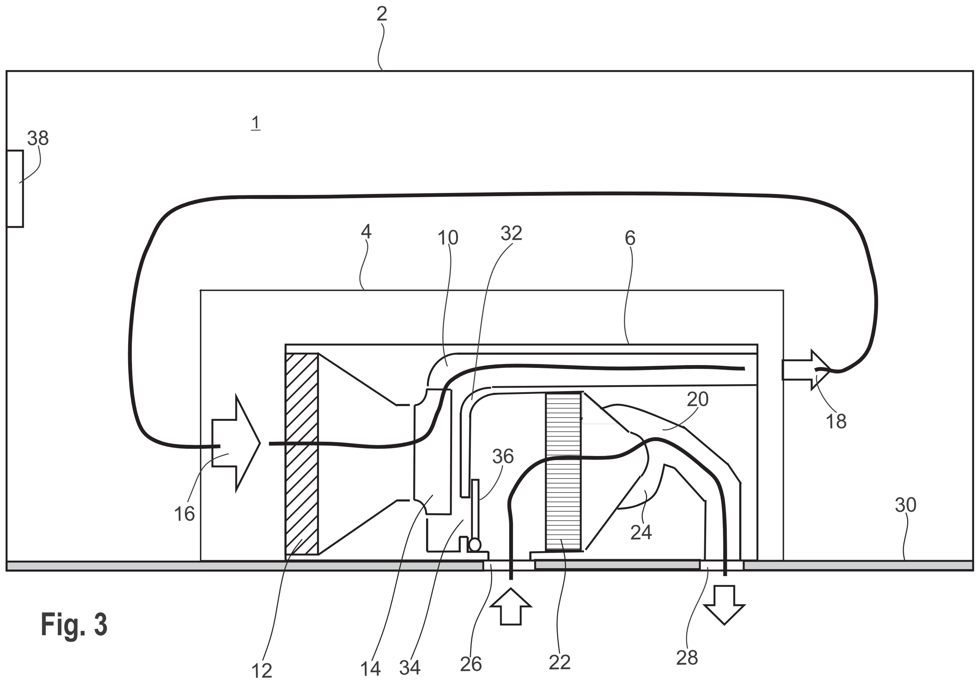

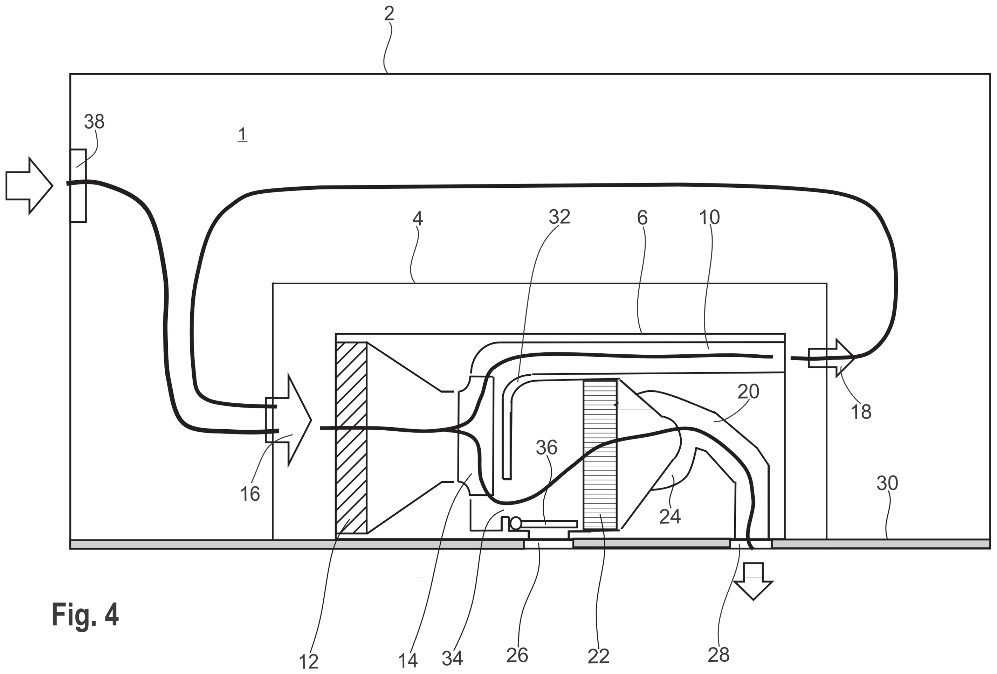

In den Figuren 3 und 4 ist eine Ausführungsvariante gezeigt. Für die von der ersten Ausführungsform bekannten Bauteile werden dieselben Bezugszeichen verwendet, und es wird auf die obigen Erläuterungen verwiesen.

Die Ausführungsvariante der Figuren 3 und 4 unterscheidet sich von der Ausführungsform der Figuren 1 und 2 dadurch, dass der Außen-Wärmetauscher 22 nicht schräg nach vorne überhängend angeordnet ist, sondern senkrecht stehend.

Die Funktionsweise im Betriebsmoduls "Heizen" und "Heizen mit Enteisen" entspricht der Funktionsweise der Ausführungsform der Figuren 1 und 2.

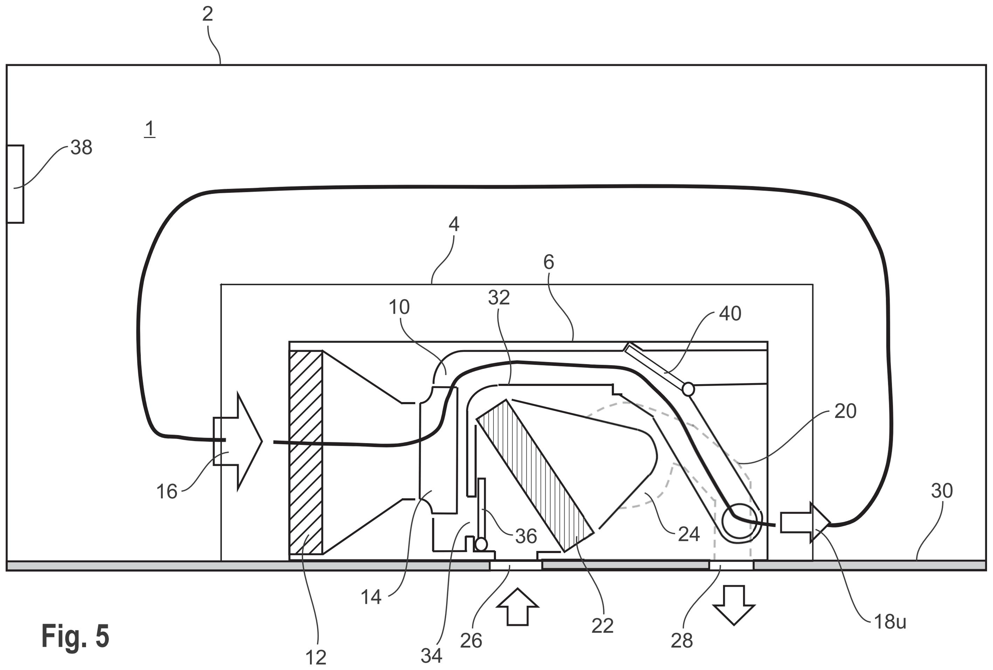

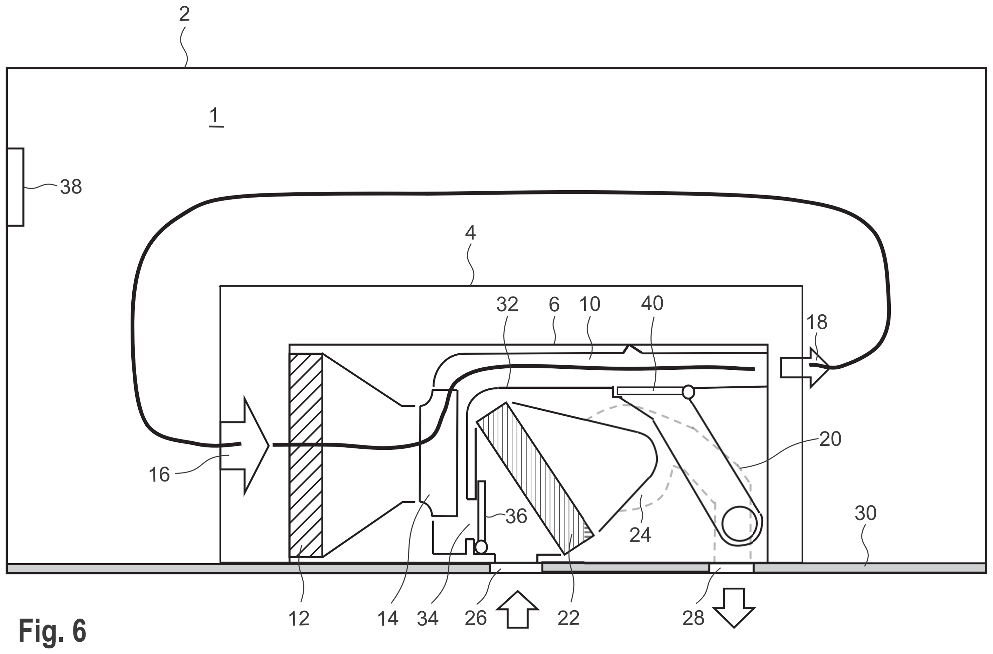

In den Figuren 5 und 6 ist eine zweiten Ausführungsform gezeigt, die auf der ersten Ausführungsform aufbaut. Für die von der ersten Ausführungsform bekannten Bauteile werden dieselben Bezugszeichen verwendet, und es wird auf die obigen Erläuterungen verwiesen.

Die Ausführungsform der Figuren 5 und 6 unterscheidet sich von der Ausführungsform der Figuren 1 und 2 dadurch, dass eine Verteilklappe 40 vorgesehen, mit der der Luftstrom zwischen einem oberen Innenluft-Auslass 18o und einem unteren Innenluft-Auslass 18u umgeschaltet werden kann. Diese Anordnung ermöglicht es, die erwärmte oder gekühlte Luft gezielt in unterschiedliche Bereiche des Innenraums 1 zu lenken und somit den Komfort für die Nutzer zu erhöhen.

Der Innen-Luftkanal 10 verzweigt sich stromabwärts des Innen-Wärmetauschers 12 in zwei separate Luftauslässe: einen oberen Innenluft-Auslass 18o und einen unteren Innenluft-Auslass 18u. Die Verteilklappe 40 ist so angeordnet, dass sie den Luftstrom entweder vollständig auf den oberen Auslass 18o, den unteren Auslass 18u oder auf beide Auslässe gleichzeitig verteilen kann.

Durch Verstellen der Verteilklappe 40 kann der Nutzer wählen, ob die Luft überwiegend nach oben oder unten geleitet wird. Im Heizmodus kann beispielsweise die warme Luft über den unteren Innenluft-Auslass 18u in Bodennähe eingeblasen werden, um von dort aus gleichmäßig aufzusteigen und den Innenraum 1 effektiv zu erwärmen. Alternativ kann die Luft über den oberen Innenluft-Auslass 18o in den oberen Bereich des Innenraums eingeblasen werden, was insbesondere dann vorteilhaft ist, wenn das Modul 4 als Klimaanlage betrieben wird.

Die Verrohrung vom Modul 4 hin zu den eigentlichen Luftauslässen, die an Wänden des Caravans o.ä. angeordnet sind, ist hier nicht gezeigt.

Die Verteilklappe 40 kann manuell oder motorisch über einen Stellmechanismus betätigt werden. Bei einer motorischen Ausführung kann die Verteilklappe 40 über eine zentrale Steuerung des Moduls 4 automatisiert in Abhängigkeit von eingestellten Klimaprofilen gesteuert werden.

Es ist auch möglich, mit den verschiedenen Luftauslässen unterschiedliche Bereiche des Caravans gezielt zu klimatisieren, beispielsweise einen Wohnbereich und einen Schlafbereich.

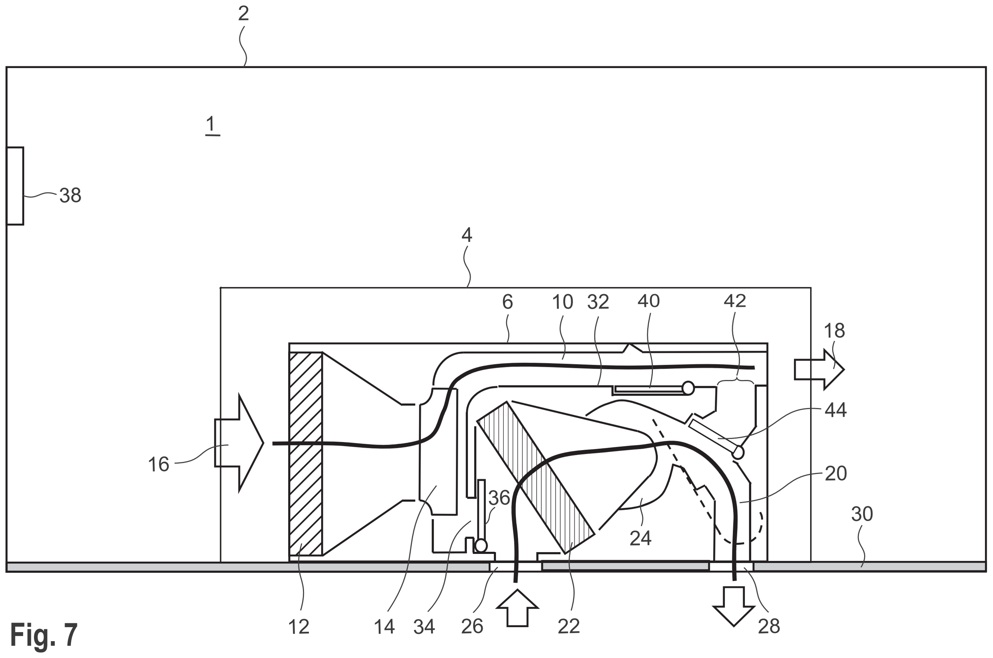

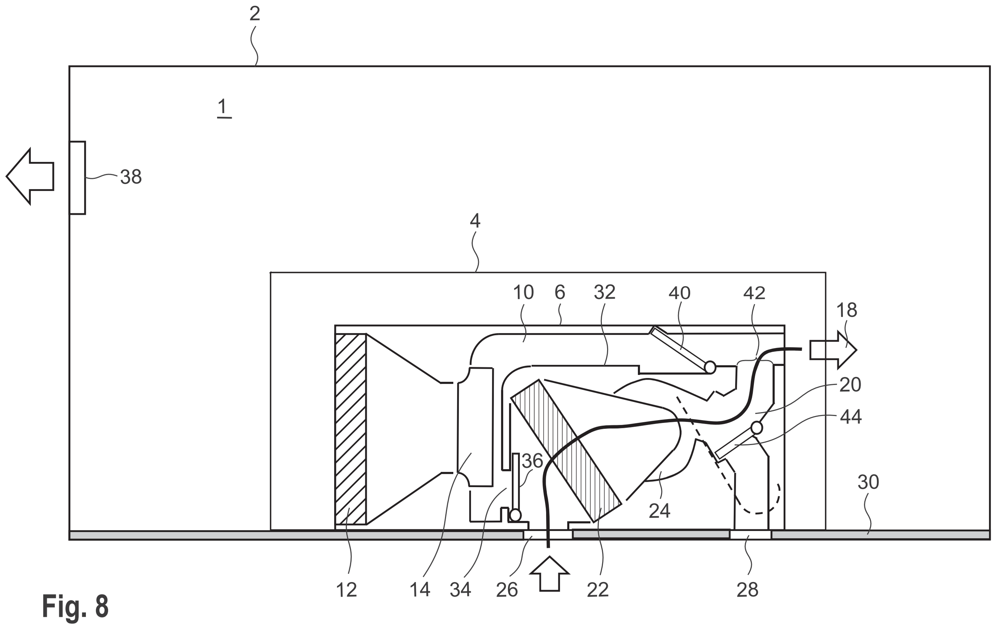

In den Figuren 7 und 8 ist eine dritte Ausführungsform gezeigt, die auf der ersten Ausführungsform aufbaut. Für die von der ersten Ausführungsform bekannten Bauteile werden dieselben Bezugszeichen verwendet, und es wird auf die obigen Erläuterungen verwiesen.

Die Ausführungsform der Figuren 7 und 8 unterscheidet sich von der Ausführungsform der Figuren 1 und 2 dadurch, dass in der Trennwand 32 eine Zuluftöffnung 42 vorgesehen ist, der eine Zuluftklappe 44 zugeordnet ist.

Wenn die Zuluftklappe 44 geschlossen ist (siehe Figur 7), arbeitet das Modul 4 in derselben Weise, wie dies oben für das Modul gemäß der ersten Ausführungsform erläutert ist.

Wenn die Zuluftklappe 44 geöffnet ist (siehe Figur 8), wird vorzugsweise gleichzeitig die Verteilklappe 40 geschlossen. Mittels des Außen-Gebläses 24 kann Luft von außerhalb des Innenraums 1 durch den Außenluft-Einlass 26 in den Innenraum 1 eingebracht werden. Das eingebrachte Luftvolumen kann durch die Ausgleichsöffnung 38 nach außen ausströmen.

Die Ausführungsform der Figuren 7 und 8 ist besonders dazu geeignet, den Innenraum 1 vorzuklimatisieren, beispielsweise, wenn er sich sehr stark aufgeheizt hat. Wenn zunächst die warme Luft aus dem Innenraum eines Caravans o.ä. verdrängt wird, ist nachfolgend weniger Energie erforderlich, um den Innenraum mittels des Moduls 4 (im Betriebsmodus "Kühlen") zu klimatisieren.

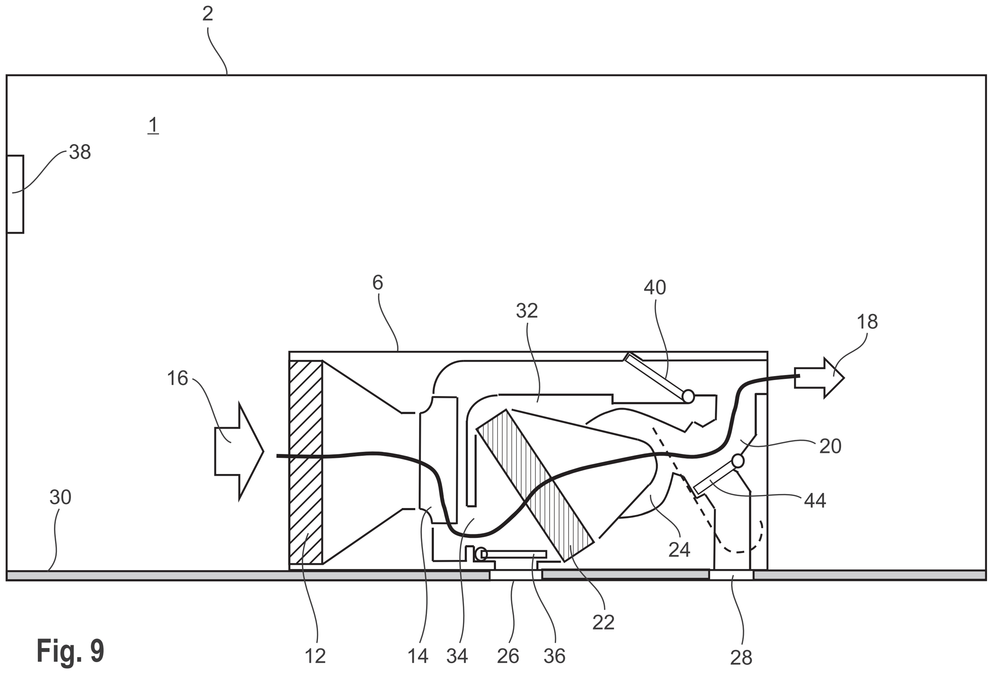

In Figur 9 ist ein weiterer Betriebsmodus des Moduls 4 von Figur 7 gezeigt.

Hier wird das Modul im Betriebszustand "Entfeuchten" betrieben, bei dem die Zuluftklappe 44 geschlossen ist, aber die Überströmöffnung 34 freigegeben ist. Das Innen-Gebläse 14 und/oder das Außen-Gebläse 24 saugen die Luft aus dem Innenraum 1 durch den Innenluft-Einlass 16 an, so dass diese den Innen-Wärmetauscher 12 durchströmt. Dabei wird der Innen-Wärmetauscher 12 als Verdampfer betrieben, sodass die ihn durchströmende Luft abgekühlt und dabei entfeuchtet wird. Die derart entfeuchtete Luft wird dann mittels des Außen-Gebläses 24 und/oder des Innen-Gebläses 14 über den nun als Kondensator betriebenen Außen-Wärmetauscher 22 geleitet und erwärmt.

Soweit gewünscht, kann hier die Temperatur der Luft im Wesentlichen konstant gehalten werden, da die Luft beim Durchströmen des Innen-Wärmetauschers 12 erst abgekühlt wird, bevor sie beim Durchströmen des Außen-Wärmetauschers 22 erwärmt wird.

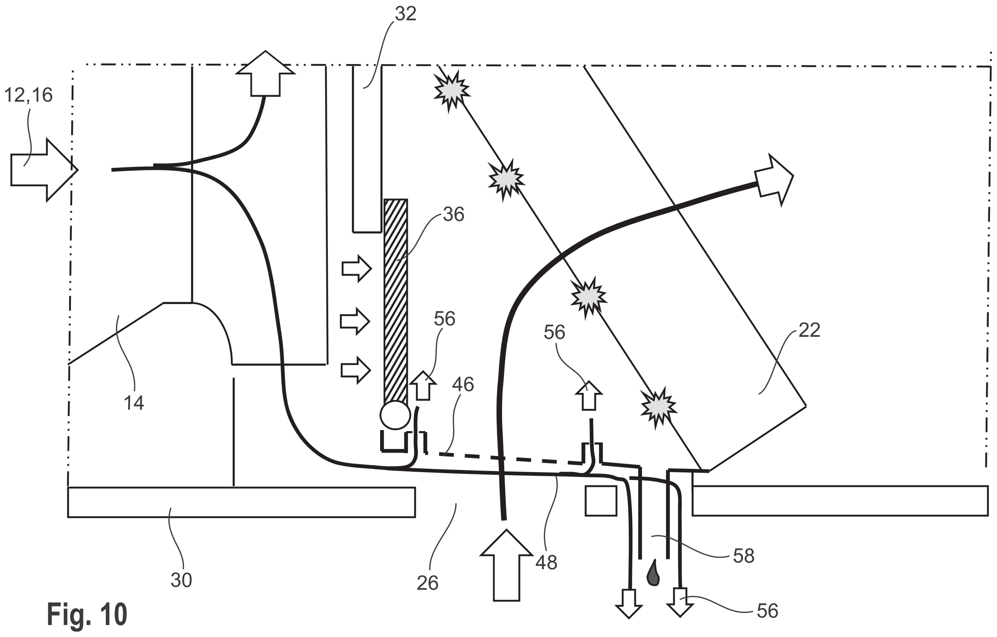

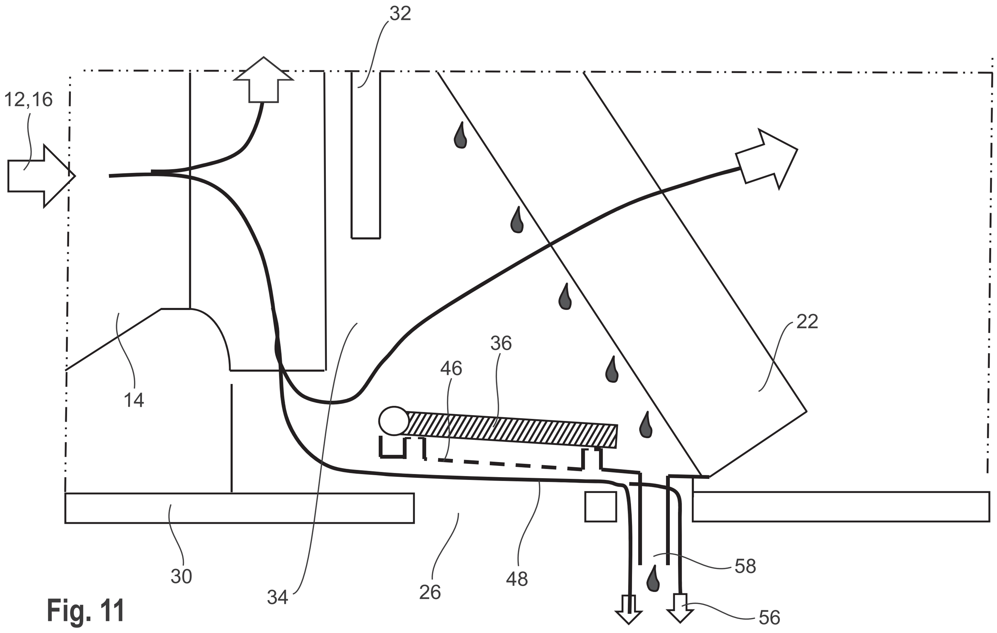

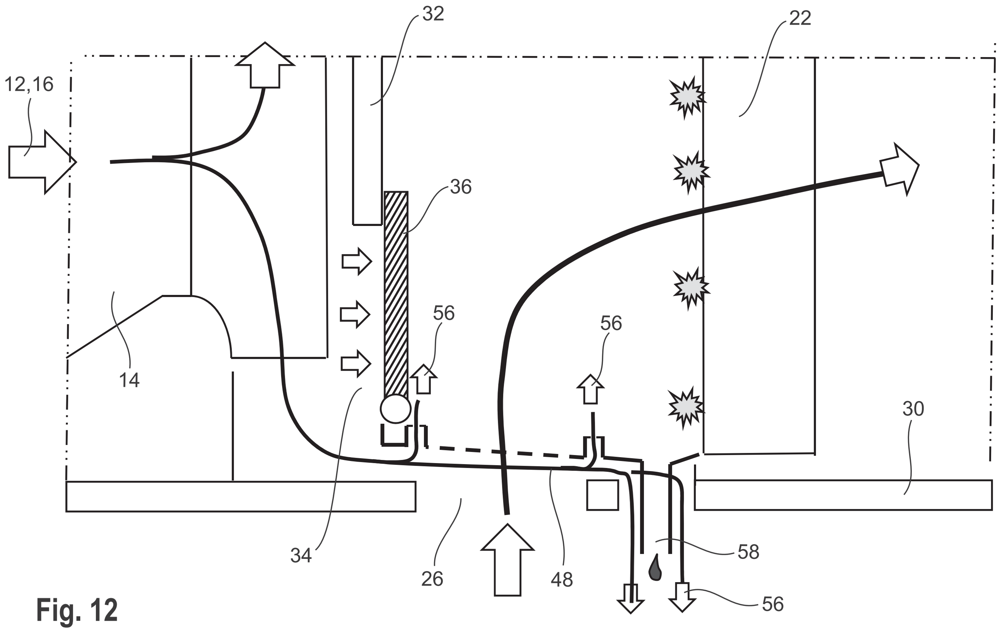

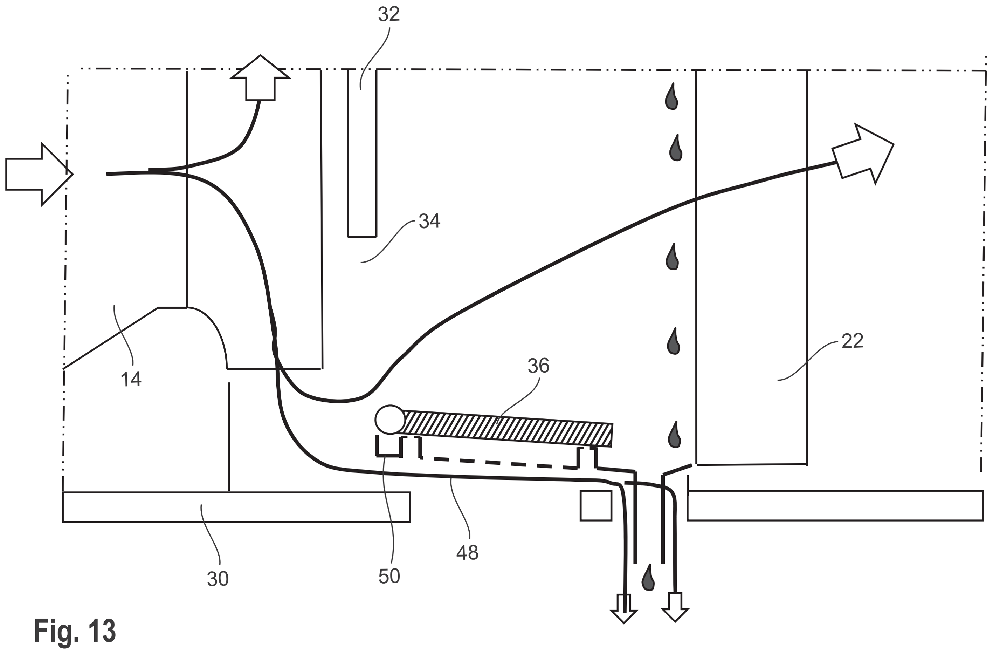

Anhand der Figuren 10 bis 13 wird nachfolgend die Kondensatableitung in den Modulen gemäß den zuvor beschriebenen Ausführungsformen detailliert erläutert. Dabei beziehen sich die Figuren 10 und 11 auf die Ausführungsform der Figuren 1 und 2, während sich die Figuren 12 und 13 auf die Ausführungsform der Figuren 3 und 4 beziehen.

Figur 10 zeigt einen Ausschnitt des Moduls 4 aus Figur 1, wobei Details der Kondensatableitung dargestellt sind. Unterhalb des Außen-Wärmetauschers 22 ist ein Kondensatelement angeordnet, das hier als Kondensatwanne 46 ausgeführt ist. Sie dient dazu, das sich am Außen-Wärmetauscher 22 bildende Kondensat aufzufangen und zuverlässig nach außen abzuführen.

Grundsätzliches Merkmal des Kondensatelements ist, dass ihm Wärmeenergie aus dem Innen-Luftkanal 10 zugeführt werden kann, um die Eisbildung zu verhindern bzw. eine Vereisung aufzutauen.

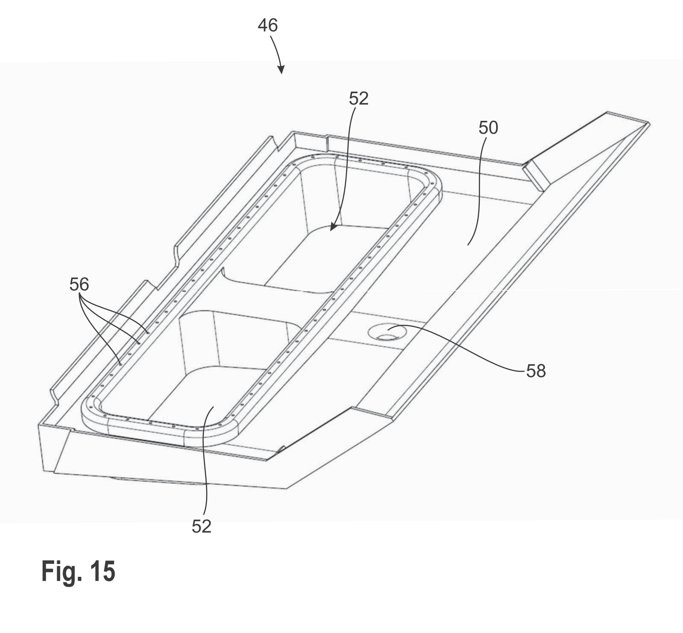

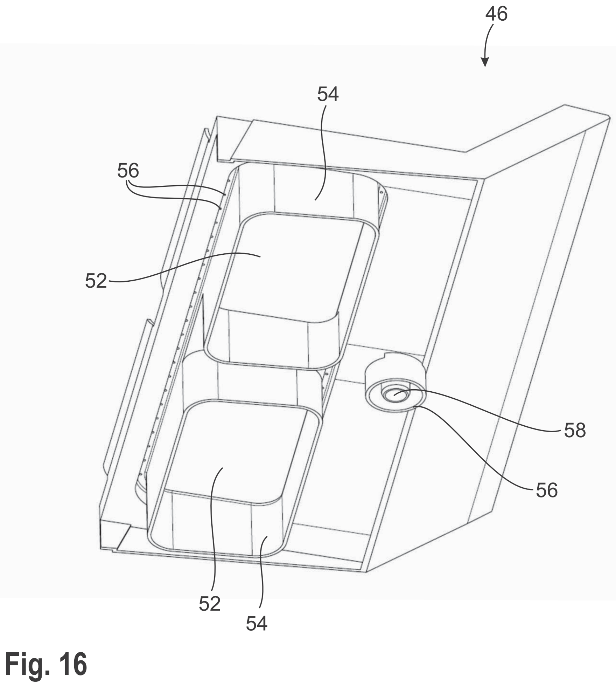

Bei der Ausgestaltung der Figuren 10, 11 und 14 bis 16 ist ein Heizluft-Führungskanal 48 (hier symbolisiert durch den Warmluftstrom) unterhalb der Bodenfläche 50 der Kondensatwanne 46 angeordnet. Durch diesen Heizluft-Führungskanal 48 wird ein Teil der warmen Luft aus dem Innen-Luftkanal 10 abgezweigt geleitet. Die warme Luft strömt unter der Kondensatwanne 46 entlang und erwärmt diese, wodurch ein Einfrieren des gesammelten Kondensats verhindert wird.

Die Kondensatwanne 46 ist mit Aussparungen 52 versehen, die dem Außenluft-Einlass 26 zugeordnet sind. Jede der Aussparungen 52 ist mit einem Kragen 54 versehen, der zum Boden 30 hin abdichtet, so dass zwischen dem Boden und der Unterseite der Kondensatwanne 46 der Heizluft-Führungskanal 48 abgegrenzt ist.

Um die Aussparungen 52 herum sind kleine Auslässe 56 für Warmluft vorgesehen. Ein Teil der Auslässe 56 liegt in der Nähe des Schaltelements 36, so dass dieses in die Überströmöffnung verschließender Stellung auf der "Kaltseite" erwärmt und dadurch vor Vereisung geschützt wird. Ebenso wird eine Abdichtungsfläche/Dichtfläche zwischen der Kondensatwanne 46 und dem Schaltelement 36 eisfrei gehalten.

Ein Teil der Auslässe 56 ist dem Außen-Wärmetauscher 22 zugeordnet, so dass dieser erwärmt und vor Vereisen geschützt ist.

Die Kondensatwanne 46 weist auch eine Kondensatabführöffnung 58 auf, durch die das gesammelte Kondensat durch den Boden 30 hindurch nach außen abgeführt wird. Um die Kondensatabführöffnung 58 ist ein weiterer Auslass 56 für Warmluft vorgesehen. Hierdurch ist verhindert, dass die Kondensatabführöffnung 58 durch Eisbildung verschlossen wird.

Wenn das Modul 4 im Modus "Heizen mit gleichzeitigem Enteisen" betrieben wird (siehe Figur 11), ist das Schaltelement 36 geöffnet, wodurch warme Luft aus dem Innen-Luftkanal 10 durch die Überströmöffnung 34 in den Außen-Luftkanal 20 strömt, um den Außen-Wärmetauscher 22 abzutauen. Dabei verschließt das Schaltelement 36 nicht nur die Aussparungen 52, sondern auch die Auslässe 56, die um die Aussparungen herum angeordnet sind. Da in diesem Zustand eine große Menge an Warmluft über das geöffnete Schaltelement strömt, wird ausreichend Wärmeenergie eingebracht, um ein Vereisen zu verhindern.

Die Figuren 12 und 13 zeigen die Kondensatwanne 46 für die in den Figuren 3 und 4 dargestellte Ausführungsvariante. Es wird insoweit auf die obigen Erläuterungen verwiesen.

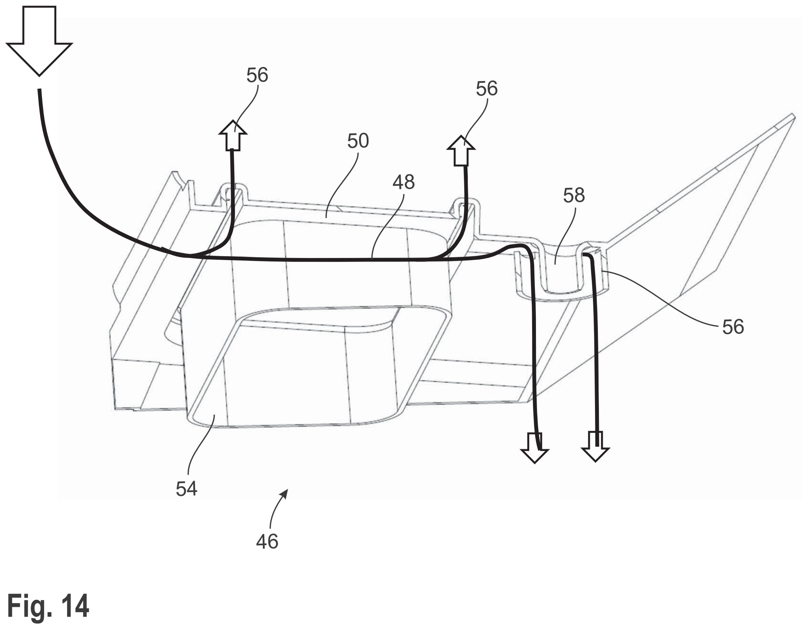

In den Figuren 14 bis 16 sind die einzelnen Elemente der Kondensatwanne 46 zu sehen, insbesondere der Heizluft-Führungskanal 48 (in einer beispielhaften Schnittebene), die Bodenfläche 50, die Aussparungen 52, die Krägen 54, die Auslässe 56 für Warmluft (auch Luftauslässe genannt) und die Kondensatabführöffnung 58.

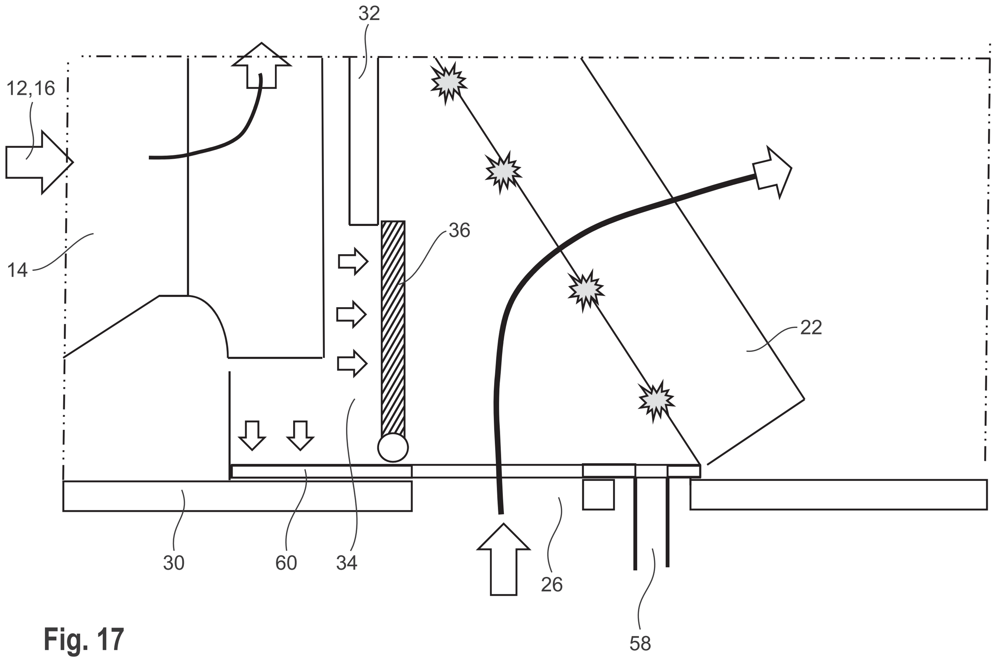

In Figur 17 ist eine Ausführungsvariante gezeigt, die auf dem Modul der Figuren 1 und 2 basiert. Es ist ein Wärmeleitelement 60 vorgesehen, das sich aus dem Innen-Luftkanal 10 in den Außen-Luftkanal 20 erstreckt, also aus der Warmluftseite in die Kaltluftseite (wenn man einen Betriebsmodus als Wärmepumpe betrachtet).

Das Wärmeleitelement 60 kann aus einem gut wärmeleitenden Material gebildet sind, beispielsweise einer Aluminiumlegierung. Das Wärmeleitelement 60 kann auch in Form des Kondensatelements ausgeführt sein.

Durch den Wärmeeintrag bleiben die mechanische Funktion des Schaltelements 36 und die Dichtwirkung des Schaltelements 36 erhalten, und die Kondensatabführöffnung 58 bleibt eisfrei.

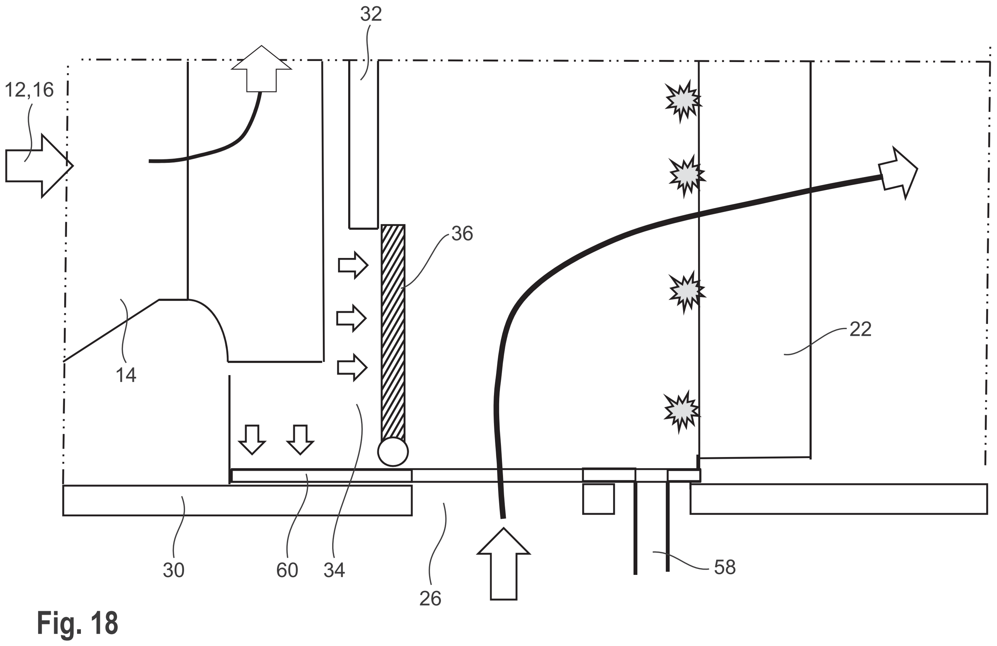

In Figur 18 ist die Ausführungsvariante von Figur 17 für die Variante des Moduls 4 mit senkrecht stehendem Außen-Wärmetauscher 22 gezeigt. Die Funktionsweise ist dieselbe wie bei dem Modul von Figur 17.

Das erfindungsgemäße Modul 4 wird so betrieben, dass sowohl eine effiziente Klimatisierung des Innenraums 1 als auch eine zuverlässige Enteisung des Außen-Wärmetauschers 22 gewährleistet ist.

Die Steuerung des Moduls erfolgt über eine zentrale Steuereinheit, welche verschiedene Parameter überwacht und bei Bedarf entsprechende Maßnahmen einleitet. Zur Erkennung einer Vereisung des Außen-Wärmetauschers 22 kommen verschiedene Sensoren und Messverfahren zum Einsatz. Ein oder mehrere Temperaturfühler erfassen die Oberflächentemperatur des Wärmetauschers; unterschreitet diese einen bestimmten Schwellenwert, beispielsweise 0 °C, kann auf eine beginnende Eisbildung geschlossen werden.

Des Weiteren wird der Druckverlust vor und nach dem Außen-Wärmetauscher 22 durch Sensoren überwacht. Eine Zunahme des Differenzdrucks weist auf eine verminderte Luftdurchlässigkeit hin, was durch Eisbildung verursacht sein kann.

Sinkt der Verdampfungsdruck im Kältemittelkreislauf unter einen bestimmten Wert, kann dies ebenfalls als Indikator für eine Vereisung dienen. Zusätzlich können Umgebungsdaten wie die Außentemperatur und die Luftfeuchtigkeit herangezogen werden. Bei Temperaturen um den Gefrierpunkt, insbesondere zwischen +5 °C und -5 °C, ist die Luftfeuchtigkeit häufig hoch, was zu vermehrter Eisbildung führen kann.

Wird eine Vereisung erkannt oder aufgrund der Umgebungsbedingungen erwartet, schaltet die Steuereinheit das Modul 4 in den Betriebsmodus "Heizen mit gleichzeitigem Enteisen" (vgl. Figur 2). Dabei wird das Schaltelement 36, welches als motorisch angetriebene Klappe ausgeführt ist, vollständig geöffnet, wodurch die Überströmöffnung 34 freigegeben und gleichzeitig der Außenluft-Einlass 26 verschlossen wird. Dies verhindert das Ansaugen kalter Außenluft. Ein Teil der vom Innen-Wärmetauscher 12 erwärmten Innenluft wird nun durch die Überströmöffnung 34 in den Außen-Luftkanal 20 geleitet. Die warme Luft strömt über den vereisten Außen-Wärmetauscher 22 und taut das Eis ab. Der verbleibende Anteil der warmen Luft wird weiterhin vom Innen-Gebläse 14 über den Innenluft-Auslass 18 in den Innenraum 1 gefördert, sodass die Beheizung ohne Unterbrechung fortgesetzt wird.

Die Dauer des Enteisungsvorgangs kann auf unterschiedliche Weise festgelegt werden. Sensorbasierte Methoden beenden den Enteisungsvorgang, wenn die Sensoren anzeigen, dass die Vereisung behoben ist, beispielsweise wenn die Temperatur am Außen-Wärmetauscher 22 über einen bestimmten Wert steigt oder der Differenzdruck wieder normale Werte erreicht. Alternativ oder ergänzend kann der Enteisungsvorgang nach einer vordefinierten Zeitspanne, etwa zwei Minuten, automatisch beendet werden. Bei kritischen Umgebungsbedingungen ist es auch möglich, die Enteisung in regelmäßigen Intervallen vorbeugend zu aktivieren, zum Beispiel alle zehn Minuten.

Während des Enteisungsvorgangs können verschiedene Betriebsparameter angepasst werden. Die Drehzahlen des Innen-Gebläses 14 und des Außen-Gebläses 24 werden so gesteuert, dass ein optimaler Luftstrom zum Enteisen erreicht wird, ohne die Beheizung des Innenraums wesentlich zu beeinträchtigen.

Das Schaltelement 36 kann in Zwischenpositionen verstellt werden, um das Verhältnis von Beheizung und Enteisung zu optimieren. Ein entscheidender Vorteil dieses Verfahrens ist, dass die Wärmepumpe während des gesamten Enteisungsvorgangs im Heizbetrieb bleibt und kontinuierlich warme Luft bereitstellt. Im Gegensatz zu herkömmlichen Verfahren, wie der Reverse-Cycle-Abtauung oder der Heißgas-Abtauung, bei denen der Heizbetrieb unterbrochen oder reduziert wird, erfährt der Nutzer hier keinen Komfortverlust.

Die technische Umsetzung umfasst eine motorische Klappenverstellung des Schaltelements 36, welches mit einem Elektromotor verbunden ist und von der Steuereinheit angesteuert wird, sodass die Klappe präzise positioniert werden kann. Die Sensorik besteht aus Temperatur- und Drucksensoren, die an strategischen Positionen im Modul 4 platziert sind und Echtzeitdaten an die Steuereinheit liefern. Ein programmierter Algorithmus wertet die Sensordaten aus und entscheidet anhand vordefinierter Schwellenwerte und Erfahrungswerte über die Notwendigkeit und Dauer der Enteisung.

Das beschriebene Verfahren ermöglicht eine effektive und effiziente Enteisung des Außen-Wärmetauschers 22, ohne den Heizkomfort im Innenraum 1 zu beeinträchtigen. Durch die kontinuierliche Bereitstellung von Warmluft und die intelligente Steuerung der Betriebsparameter wird ein hoher Wirkungsgrad erzielt und die Lebensdauer des Moduls 4 erhöht. Die Wärmepumpe läuft während des Enteisungsvorgangs weiter und kann Warmluft an den Auslässen bereitstellen, was einen bedeutenden Vorteil gegenüber bekannten Verfahren darstellt, bei denen der Heizbetrieb zyklisch unterbrochen werden muss.

## Patentansprüche

1. Modul (4) zur Klimatisierung eines Innenraums (1) eines Caravans (2) o. ä., mit
- einem Innen-Luftkanal (10), in dem ein Innen-Wärmetauscher (12) angeordnet ist, der dafür vorgesehen ist, mit Luft aus dem Innenraum des Caravans zu interagieren,
- einem Außen-Luftkanal (20), in dem ein Außen-Wärmetauscher (22) angeordnet ist, der dafür vorgesehen ist, mit Außenluft zu interagieren,
- einer Überströmöffnung (34), die in einer Trennwand (32) zwischen dem Innen-Luftkanal (10) und dem Außen-Luftkanal (20) stromabwärts des Innen-Wärmetauschers (12) und stromaufwärts des Außen-Wärmetauschers (22) angeordnet ist,
- einem Schaltelement (36), das die Überströmöffnung (34) verschließen oder freigeben kann, und
- mit einem Kondensatelement (46), dem Wärmeenergie aus dem Innen-Luftkanal (10) zugeführt werden kann, wobei das Kondensatelement (46) zum Auffangen und Abführen von sich am Außen-Wärmetauscher (22) bildendem Kondensat dient, wobei das Kondensatelement (46) unterhalb des Außen-Wärmetauschers (22) angeordnet ist.

2. Klimatisierungsmodul nach Anspruch 1, **dadurch gekennzeichnet, dass** das Schaltelement (36) verstellbar ist zwischen einer Position, in der die Überströmöffnung (34) vollständig geschlossen ist, und einer Position, in der ein Außenluft-Einlass (26) zum Außen-Luftkanal (20) verschlossen ist.

3. Klimatisierungsmodul nach Anspruch 1 oder Anspruch 2, **dadurch gekennzeichnet, dass** im Innen-Luftkanal (10) und im Außen-Luftkanal (20) jeweils ein Gebläse (14, 24) angeordnet ist.

4. Klimatisierungsmodul nach einem der vorhergehenden Ansprüche, **dadurch gekennzeichnet, dass** im Innen-Luftkanal (10) eine Verteilklappe (40) vorgesehen ist, mit der der Luftstrom zwischen einem ersten und einem zweiten Innenluft-Auslass (18o, 18u) verteilt werden kann.

5. Klimatisierungsmodul nach einem der vorhergehenden Ansprüche, **dadurch gekennzeichnet, dass** eine Zuluftöffnung (42) in einer Trennwand (32) zwischen dem Außen-Luftkanal (20) und dem Innen-Luftkanal (10) vorgesehen ist, der eine Zuluftklappe (44) zugeordnet ist.

6. Klimatisierungsmodul nach Anspruch 4 und Anspruch 5, **dadurch gekennzeichnet, dass** die Zuluftöffnung (42) stromabwärts der Verteilklappe (40) im Innen-Luftkanal (10) mündet.

7. Klimatisierungsmodul nach einem der vorhergehenden Ansprüche, **dadurch gekennzeichnet, dass** ein Wärmeleitelement (60) vorgesehen ist, das dem Schaltelement (36) zugeordnet ist und sich aus dem Innen-Luftkanal (10) in den Außen-Luftkanal (20) erstreckt.

8. Klimatisierungsmodul nach einem der vorhergehenden Ansprüche, **dadurch gekennzeichnet, dass** das Kondensatelement als Kondensatwanne (46) ausgebildet ist, die dem Außen-Wärmetauscher (22) zugeordnet ist, wobei die Kondensatwanne (46) mindestens einen Luftauslass (56) aufweist, der mit dem Innen-Luftkanal (10) stromabwärts des Innen-Wärmetauschers (12) in Strömungsverbindung steht.

9. Klimatisierungsmodul nach Anspruch 8, **dadurch gekennzeichnet, dass** der Luftauslass (56) eine Kondensatabführöffnung (58) umgibt.

10. Klimatisierungsmodul nach Anspruch 8 oder Anspruch 9, **dadurch gekennzeichnet, dass** der Luftauslass (56) dem Schaltelement (36) zugeordnet ist.

11. Klimatisierungsmodul nach einem der Ansprüche 8 bis 10, **dadurch gekennzeichnet, dass** der Luftauslass (56) dem Außen-Wärmetauscher (22) zugeordnet ist.

12. Klimatisierungsmodul nach einem der Ansprüche 8 bis 11, **dadurch gekennzeichnet, dass** der Luftauslass (56) einem Außenluft-Einlass (26) zugeordnet ist.

13. Klimatisierungsmodul nach einem der Ansprüche 8 bis 12, **dadurch gekennzeichnet, dass** ein Heizluft-Führungskanal (48) unterhalb einer Bodenfläche (50) der Kondensatwanne (46) angeordnet ist.
